# EUROPÄISCHE PATENTSCHRIFT

(11) **EP 2 366 892 B1**
(45) Veröffentlichungstag und Bekanntmachung des Hinweises auf die Patenterteilung: **30.07.2014**
(21) Anmeldenummer: 10002872.9
(22) Anmeldetag: 18.03.2010
(51) Int. Cl.: F03D 1/06

(54) **Windenergieanlagenrotorblatt**
Wind turbine rotor blade
Pale de rotor d'éolienne

(43) Veröffentlichungstag der Anmeldung: 21.09.2011
(73) Patentinhaber: Nordex Energy GmbH, 22848 Norderstedt (DE)
(72) Erfinder: Fischer, Gunter, 22081 Hamburg (DE)
(74) Vertreter: Hauck Patent- und Rechtsanwälte

(56) Entgegenhaltungen:
- EP-A1- 0 652 367
- EP-A1- 2 031 242
- EP-A1- 2 138 714
- WO-A1-02/08600
- WO-A1-2004/097215
- WO-A1-2008/070917
- WO-A1-2010/051648
- WO-A2-2008/052677
- WO-A2-2008/092461
- WO-A2-2009/130500
- WO-A2-2010/013024
- DE-A1-102006 017 897

## Beschreibung

Die Erfindung betrifft ein Windenergieanlagenrotorblatt mit einer Längsachse, einer Blattspitze, einer Blattwurzel, einer Vorderkante, einer Hinterkante, einer Druckseite, einer Saugseite und einem orthogonal zur Längsachse angeordneten, sich von der Blattwurzel zur Blattspitze hin ändernden Querschnitt, der an der Blattwurzel im Wesentlichen kreisförmig und in der Mitte des Rotorblatts von einem aerodynamischen Profil gebildet ist. Derartige Rotorblätter werden insbesondere für Windenergieanlagen mit einem zwei- oder dreiblättrigen Rotor mit horizontaler Achse genutzt. Sie sind an ihrer Blattwurzel mit einer Nabe des Rotors verbunden. Dabei kann an der Blattwurzel des Rotorblatts ein Befestigungsflansch ausgebildet und der Pitchwinkel des Blatts mit Hilfe eines Pitchantriebs verstellbar ausgeführt sein.

Bekannte Rotorblätter stellen einen Kompromiss aus der aerodynamischen Optimalform, den Erfordernissen der Festigkeitsauslegung und dem Bestreben einer rationellen Herstellungstechnik dar. Insbesondere die relative Dicke der verwendeten aerodynamischen Profile muss unter Festigkeitsgesichtspunkten gewählt werden. Dabei kann im aerodynamisch besonders wichtigen Außenbereich der Rotorblätter mit einer relativ geringen Blattdicke von weniger als 30 % der Profiltiefe, häufig zwischen 18 und 15 % derselben, gearbeitet werden. Der weiter zur Nabe hin liegende Innenbereich der Rotorblätter spielt aerodynamisch eine weniger entscheidende Rolle, so dass zur Erreichung einer ausreichenden Festigkeit stärker vom aerodynamischen Optimum abgewichen und eine relativ große Blattdicke verwirklicht werden kann. Zur Blattwurzel hin geht das aerodynamische Profil dann in den im Wesentlichen kreisförmigen Querschnitt über. Um die aerodynamische Leistung der Rotorblätter im Innenbereich zu verbessern, sind aus dem Stand der Technik unterschiedliche Ansätze bekannt.

Aus der Druckschrift WO 02/08600 A1 ist die Verwendung eines rippenförmigen, sich in Längsrichtung entlang der Hinterkante des Rotorblatts erstreckenden Anbauteils bekannt. Das Anbauteil befindet sich vorwiegend in einem zylindrischen Verbindungsbereich des Rotorblatts, welcher einen weiter außen angeordneten, mit einem aerodynamischen Profil versehenen Rotorblattabschnitt mit der Nabe verbindet. Auf diese Weise trägt auch der andernfalls aerodynamisch nicht wirksame Verbindungsbereich zur Leistungsfähigkeit des Rotors bei.

Aus der Druckschrift DE 10 2006 017 897 B4 ist ein Rotorblatt für eine Windenergieanlage mit einer Aufsatzvorrichtung auf der Druckseite nahe der Blattwurzel bekannt. Die bekannte Aufsatzvorrichtung erstreckt sich im Wesentlichen in Längsrichtung des Rotorblatts. Eine sogenannte Aufsatzanströmfläche der bekannten Aufsatzvorrichtung beginnt auf der Druckseite an einem Punkt des Profils, in dem eine an das Profil angelegte Tangente in einem Winkelbereich von -20° bis +20° zur Auslegungsanströmrichtung verläuft. Die Aufsatzanströmfläche verläuft ungefähr im Winkel dieser Tangente bis zu einer von der Rotorblatthinterkante verschiedenen Hinterkante der Aufsatzvorrichtung, an die sich eine hintere Fläche der Aufsatzvorrichtung anschließt, die zur Druckseite des Profils zurückführt. Vergleichbare Aufsatzvorrichtungen sind auch aus den Druckschriften EP 2 138 714 A1 und EP 2 141 358 A1 bekannt.

Aus der Druckschrift WO 2004/097215 A1 ist ein Rotorblatt einer Windenergieanlage bekannt, das speziell für eine getriebelose Windenergieanlage konzipiert ist. Derartige Windenergieanlagen weisen eine Nabe mit relativ großem Durchmesser auf. Bei diesem bekannten Rotorblatt wird das aerodynamische Profil des Rotorblatts im Wesentlichen bis an die Nabe heran fortgesetzt, was wegen der aus Festigkeitsgründen erforderlichen, großen Profildicke nahe der Nabe zu einer sehr großen Profiltiefe führt. Eine Umströmung des der Nabe zugewandten hinteren Profilabschnitts wird dadurch vermieden, dass das Profil entlang seiner gesamten Tiefe sehr nah an die Nabe herangeführt ist.

Aus der Druckschrift WO 2009/130500 A2 ist ein Rotorblatt für eine Windenergieanlage bekannt geworden, das entlang seiner Längsrichtung zwei unterschiedlich wirkende Abschnitte aufweist. Es wird zwischen einem Hauptprofil und einem Hilfsprofil unterschieden, die unterschiedliche Pitchwinkel aufweisen. Das Hilfsprofil befindet sich nahe der Blattspitze und weist einen Pitchwinkel auf, der bei bestimmten Windverhältnissen zu einem Abbremsen des Rotors führt. In einem Längsabschnitt, der in einem Übergangsbereich zwischen Hauptprofil und Hilfsprofil angeordnet ist, nimmt der Pitchwinkel zur Blattwurzel hin ab. In einem inneren Längsabschnitt nimmt der Pitchwinkel zur Blattwurzel hin zu.

Die Druckschrift WO 2010/013024 A2 zeigt ein Rotorblatt für eine Windenergieanlage mit einem Anbauteil, das einen Rahmen und eine Hülle aufweist. Das Anbauteil vergrößert die,Profiltiefe in einem nahe der Blattwurzel angeordneten Längsabschnitt des Rotorblatts.

Davon ausgehend ist es die Aufgabe der Erfindung, ein Windenergieanlagenrotorblatt zur Verfügung zu stellen, das eine bessere Leistungsfähigkeit insbesondere im Innenbereich des Rotors aufweist.

Diese Aufgabe wird gelöst durch das Windenergieanlagenrotorblatt mit den Merkmalen des Anspruchs 1. Vorteilhafte Ausgestaltungen sind in den sich anschließenden Unteransprüchen angegeben.

Das erfindungsgemäße Windenergieanlagenrotorblatt hat eine Längsachse, eine Blattspitze, eine Blattwurzel, eine Vorderkante, eine Hinterkante, eine Druckseite, eine Saugseite und einen orthogonal zur Längsachse angeordneten, sich von der Blattwurzel zur Blattspitze hin ändernden Querschnitt, der an der Blattwurzel im Wesentlichen kreisförmig und in der Mitte des Rotorblatts von einem aerodynamischen Profil gebildet ist. Eine gedachte, bezüglich des Rotorblatts fest angeordnete Bezugsebene schließt die Längsachse des Rotorblatts ein. In einem bzw. in jedem Querschnitt ist zwischen dieser Bezugsebene und einer Geraden, die die Längsachse mit der Hinterkante verbindet, ein Winkel α₃ definiert, der die Lage der Hinterkante in dem Querschnitt beschreibt. Der Winkel α₃ nimmt in einem ersten Längsabschnitt des Rotorblatts mit abnehmendem Abstand von der Blattwurzel zu und in einem zweiten Längsabschnitt, der näher an der Blattwurzel angeordnet ist als der erste Längsabschnitt, mit abnehmendem Abstand von der Blattwurzel ab.

Wie jedes Windenergieanlagenrotorblatt ist das erfindungsgemäße Rotorblatt so ausgelegt, dass es bei einem bestimmten Verhältnis aus Umlaufgeschwindigkeit an der Blattspitze und Windgeschwindigkeit, d.h. bei der sogenannten Auslegungsschnelllaufzahl, und einem vorgegebenen Pitchwinkel eine optimale Leistungsaufnahme aus dem Wind ermöglicht. Wird das Rotorblatt bei der Auslegungsschnelllaufzahl betrieben, strömt die Luft an jeder Längsposition des Rotorblatts in einer definierten Anströmrichtung an. Diese wird als Auslegungsanströmrichtung bezeichnet. An der Hinterkante laufen Saug- und Druckseite in der Regel in einem spitzen Winkel zusammen. Bei Rotorblättern mit einer sogenannten "dicken Hinterkante" befindet sich im Profil hinten ein gradliniger Abschnitt, der im Wesentlichen senkrecht zur Auslegungsanströmrichtung angeordnet ist und eine rückwärtige Fläche des Rotorblatts bildet. In diesem Fall wird die Hinterkante des Rotorblatts definitionsgemäß von den Mittelpunkten der die "dicke Hinterkante" bildenden geradlinigen Abschnitte gebildet. Die Vorderkante des Rotorblatts ist die am weitesten von der Hinterkante entfernte vordere Kante des Rotorblatts. Von der Vorderkante zu unterscheiden ist derjenige Punkt im vorderen Bereich des Rotorblatts, an dem die anströmende Luft sich in einen entlang der Druckseite und einen entlang der Saugseite strömenden Luftstrom teilt. Dies ist der Staupunkt. Die Lage des Staupunkts hängt im Gegensatz zur Lage der Vorderkante von den Betriebsbedingungen des Rotorblatts, insbesondere vom Pitchwinkel, ab. Die Blattwurzel ist im Wesentlichen kreisförmig und kann mit einem Befestigungsflansch zur Befestigung an einer Rotornabe versehen sein. Die Druckseite bezeichnet die zwischen Vorder- und Hinterkante befindliche Fläche des Rotarblatts, auf der im Betrieb in der Regel ein Überdruck entsteht. Entsprechend bezeichnet die Saugseite diejenige Fläche des Rotorblatts zwischen Vorderkante und Hinterkante, auf der im Betrieb in der Regel ein Unterdruck entsteht. Die Längsachse des Rotorblatts ist definiert als Gerade durch den Mittelpunkt des kreisförmigen Querschnitts an der Blattwurzel, die senkrecht zu diesem kreisförmigen Querschnitt ausgerichtet ist.

Das aerodynamische Profil in der Mitte des Rotorblatts gleicht grundsätzlich einem Tragflächenprofil eines Flugzeugs. Es weist in der Regel eine konvexe Saugseite, einen vorderen, konvexen Druckseitenabschnitt und einen hinteren, ebenfalls konvexen oder konkaven Druckseitenabschnitt auf. Die beiden genannten Druckseitenabschnitte gehen in der Regel krümmungsstetig ineinander über, d.h. ohne einen Knick, an dem sich die Richtung einer Tangente sprunghaft ändert.

Die gedachte Bezugsebene schließt die Längsachse des Rotorblatts ein, erstreckt sich also in Längsrichtung des Rotorblatts. Die mit Bezug zu dieser Ebene gemessenen Winkel α₃ hängen von der Wahl der Bezugsebene ab, ändern sich jedoch nicht bei einer Variation des Pitchwinkels, da die Position der Bezugsebene relativ zum Rotorblatt fest ist. Die Bezugsebene ist nicht verwunden oder gekrümmt. Um die Bezugsebene eindeutig zu wählen, kann eine zweite, in der Ebene befindliche Richtung festgelegt werden, z.B. die Richtung einer Profilsehne des Rotorblatts an einer bestimmten Längsposition.

Im Folgenden und bei der Beschreibung des Ausführungsbeispiels wird als zweite Richtung eine senkrecht auf die Längsachse und auf die Rotorachse stehende Richtung gewählt, wobei der Pitchwinkel einen für optimale Leistungsaufnahme aus dem Wind im Teillastbetrieb optimierten Wert aufweist. Der für den Teillastbetrieb optimierte Pitchwinkel ist derjenige Pitchwinkel, mit dem das Rotorblatt im Teillastbetrieb bevorzugt betrieben wird. Er führt zu einer optimalen Leistungsaufnahme aus dem Wind, insbesondere bei der Auslegungsschnelllaufzahl. Mit steigender Windgeschwindigkeit erhöht sich im Teillastbetrieb die aufgenommene Leistung. Bei Erreichen einer maximalen Leistung kann die Leistung nicht weiter erhöht werden. Steigt die Windgeschwindigkeit weiter an, erfolgt daher eine Verschlechterung des aerodynamischen Wirkungsgrads durch Vergrößern des Pitchwinkels. Es kann eine Regelung der Leistung durch Steuern des Pitchwinkels erfolgen, und die Anlage befindet sich im sogenannten pitchgeregelten Betrieb oder Volllastbetrieb. Bei dem für den Teillastbetrieb optimierten Pitchwinkel handelt es sich um eine eindeutig definierte Größe, die bei der Konstruktion des Rotorblatts berücksichtigt wird.

Die sich aus der gewählten zweiten Richtung ergebende Bezugsebene entspricht der Rotorebene, d.h. im Wesentlichen der von dem Rotorblatt bei Rotation um die Rotorachse überstrichenen Ebene. Diese Betrachtung gilt streng genommen allerdings nur bei einem senkrecht zur Rotorachse angeordneten Rotorblatt. In der Praxis kann die Längsachse des Rotorblatts auch leicht gegenüber dieser Senkrechten auf die Rotorachse geneigt sein, so dass das Rotorblatt nicht in einer Ebene, sondern auf einem Konus rotiert. Soweit jetzt und im Folgenden dennoch von der "Rotorebene" gesprochen wird, ist stets diejenige Ebene gemeint, die bei der aktuellen Drehstellung des Rotorblatts die Längsachse des Rotorblatts einschließt und eine zweite Richtung, die senkrecht zur Längsachse des Rotorblatts und senkrecht zur Rotorachse angeordnet ist.

Die Erfindung beruht auf der Erkenntnis, dass aerodynamische Verluste insbesondere in demjenigen blattwurzelnahen Bereich auftreten, in dem sich die Profiltiefe schnell ändert. Dies ist bei herkömmlichen Rotorblattgeometrien nahe der Blattwurzel der Fall, wo der Übergang von einem aerodynamischen Profil zu dem im Wesentlichen kreisförmigen Querschnitt nahe der Blattwurzel vollzogen wird. In diesem Übergangsbereich kommt es aufgrund des Druckgefälles zwischen der Druckseite und der Saugseite zu einer Umströmung der zur Rotorachse weisenden Bereiche der Hinterkante des Rotorblatts. Dies führt einerseits zur Ausbildung eines unvermeidlichen Wirbels, der mit einem induzierten Widerstand einhergeht, andererseits zu Auflriebsverlusten, die das von dem Rotor bereitgestellte Drehmoment reduzieren.

Bei der Erfindung wird einer Umströmung der genannten, nahe der Blattwurzel befindlichen Hinterkantenbereiche des Rotorblatts dadurch entgegengewirkt, dass der Winkel α₃ in einem relativ nahe an der Blattwurzel liegenden, zweiten Längsabschnitt abnimmt. Dieser abnehmende Winkel α₃ steht im Gegensatz zu dem zunehmenden Winkel α₃ im ersten, weiter außen liegenden Längsabschnitt. Bekanntermaßen ändert sich die Anströmrichtung mit abnehmendem Abstand von der Blattwurzel, weil das Verhältnis aus Rotationsgeschwindigkeit und Windgeschwindigkeit zur Blattwurzel hin abnimmt. Bei herkömmlichen Rotorblättern folgt die Richtung der Profilsehne und damit auch der Winkel α₃ dem bis zur Blattwurzel hin immer weiter aus der Rotorebene zur Rotorachse hin schwenkenden Anströmrichtung, damit das Profil immer optimal zur Anströmrichtung ausgerichtet ist. Bei der Erfindung wird im zweiten Längsabschnitt von dieser "optimalen" Ausrichtung abgewichen. Durch den im zweiten Längsabschnitt zur Blattwurzel hin abnehmenden Winkel α₃ erhält der innere, hintere Abschnitt des Rotorblatts eine Krümmung, die einem Umströmen der Hinterkante nahe der Blattwurzel entgegenwirkt.

Vereinfacht gesprochen ist der erzielte Effekt vergleichbar mit dem eines aus dem Flugzeugbau bekannten "winglets", also einer an den äußeren Tragflächenenden quer zur Längsrichtung der Tragflächen angeordneten Fläche, die ein Umströmen der Tragflächenspitzen teilweise verhindert. Die Strömungsverhältnisse bei einem Rotorblatt sind jedoch aufgrund der Rotationsbewegung komplizierter, so dass sich Erkenntnisse aus dem Flugzeugbau in der Regel nicht übertragen lassen. Zudem befindet sich die besondere Rotorblattgeometrie nicht an der Blattspitze, sondern nahe der Blattwurzel.

In einer Ausgestaltung nimmt der Winkel α₃ in dem ersten Längsabschnitt monoton zu und/oder in dem zweiten Längsabschnitt monoton ab. Bevorzugt nimmt der Winkel α₃ in dem ersten Längsabschnitt streng monoton zu und/oder in dem zweiten Längsabschnitt streng monoton ab. Der Winkel α₃ nimmt zudem bevorzugt stetig, d.h. nicht sprunghaft, ab bzw. zu. Die Hinterkante des Rotorblatts erhält dadurch einen gleichmäßigen Verlauf, was aerodynamisch vorteilhaft ist.

Bei der Erfindung beginnt der erste Längsabschnitt an einem ersten Querschnitt, der nahe der Blattspitze angeordnet ist, und erstreckt sich bis zu einem zweiten Querschnitt, der weniger als 25 % der Rotorblattlänge von der Blattwurzel entfernt ist. Der zweite Querschnitt kann auch weniger als 20 % oder sogar weniger als 15 % der Rotorblattlänge von der Blattwurzel entfernt sein. Der erste Längsabschnitt mit zur Blattwurzel hin zunehmendem Winkel α₃ erstreckt sich somit über einen Großteil der Rotorblattlänge. In diesem Längsabschnitt ist der Pitchwinkel des Rotorblatts zur Erzielung eines optimalen Auftriebs an die Anströmrichtung der Luft angepasst. Der zweite Längsabschnitt mit abnehmendem Winkel α₃ befindet sich nur in dem verbleibenden, blattwurzelnahen Längsabschnitt des Rotorblatts.

In einer Ausgestaltung grenzt der zweite Längsabschnitt an einem zweiten Querschnitt unmittelbar an den ersten Längsabschnitt an, wobei der Winkel α₃ in dem zweiten Querschnitt ein Maximum aufweist. Mit diesem Verlauf des Winkels α₃ erhält die Hinterkante des Rotorblatts einen gleichmäßig geschwungenen, aerodynamisch vorteilhaften Verlauf.

In einer Ausgestaltung erstreckt sich der zweite Längsabschnitt in Richtung zu der Blattwurzel hin bis zu einem dritten Querschnitt, der an einer Längsposition des Rotorblatts angeordnet ist, an der das aerodynamisch wirksame Profil des Rotorblatts endet. An diesem dritten Querschnitt kann insbesondere der Übergang von einem aerodynamisch wirksamen Profil zu dem kreisförmigen Querschnitt an der Blattwurzel vollzogen sein. Die Hinterkante des Rotorblatts, deren Umströmung durch die Erfindung verhindert oder zumindest vermindert werden soll, beginnt von der Blattwurzel ausgehend betrachtet an eben dieser Längsposition.

In einer Ausgestaltung ist der dritte Querschnitt in einem Abstand von 0,5 m oder mehr von der Blattwurzel angeordnet. Zwischen Blattwurzel und dem dritten Querschnitt kann das Rotorblatt einen kreisförmigen Querschnitt aufweisen, was insbesondere den Transport und die Montage des Rotorblatts erleichtern kann. Ein Transportgurt kann in diesem Bereich um das Rotorblatt herumgeführt werden, ohne dass eine Beschädigung des aerodynamischen Profils zu befürchten ist.

In einer Ausgestaltung ist ein Winkel α₁ in einer senkrecht zur Rotorebene und parallel zur Längsachse des Rotorblatts angeordneten Ebene zwischen der Rotorebene und einer Tangentialebene an die Druckseite an der Hinterkante am dritten Querschnitt definiert, wenn das Rotorblatt einen für den Teillastbetrieb optimierten Pitchwinkel aufweist, und der Winkel α₁ liegt im Bereich von 30° bis 90°. Der Winkel α₁ ist definiert in einer senkrecht zur Rotorebene und parallel zur Längsachse des Rotorblatts angeordneten Ebene. Die das Rotorblatt auf der Druckseite im Bereich des dritten Querschnitts umströmende Luft strömt im Bereich der Hinterkante an der Tangentialebene entlang. Der Winkel α₁ ist von Bedeutung für die Fähigkeit des Rotorblatts, einer blattwurzelseitigen Umströmung der Hinterkante entgegenzuwirken. Versuche haben ergeben, dass mit einem Winkel α₁ im Bereich von 30° bis 90° die gewünschte Wirkung erzielt werden kann.

In einer Ausgestaltung ist ein Winkel α₂ in der Rotorebene zwischen der Längsachse des Rotorblatts und der Projektion einer Tangente an die Hinterkante des Rotorblatts am dritten Querschnitt auf die Rotorebene definiert, wenn das Rotorblatt einen für den Teillastbetrieb optimierten Pitchwinkel aufweist, und der Winkel α₂ liegt im Bereich von 25° bis 90° liegt. Der Winkel α₂ ist ebenfalls bedeutsam für die Ausprägung der Luftströmung im Bereich der Hinterkante nahe der Blattwurzel. Versuche haben ergeben, dass mit einem Winkel α₂ im genannten Bereich gute Ergebnisse erzielt werden können.

Bei der Erfindung ist ein hinterer Abschnitt der Druckseite im zweiten Längsabschnitt zweifach konkav gekrümmt. Zweifach konkav gekrümmt bedeutet, dass eine konkave Krümmung in zwei unterschiedlichen Richtungen vorhanden ist, beispielsweise eine erste konkave Krümmung, die zu einem kurvenförmigen Verlauf des Druckseitenabschnitts in einer Querschnittsebene führt, und eine zweite konkave Krümmung, die zu einem kurvenförmigen Verlauf des Druckseitenabschnitts in einer senkrecht auf die Rotorebene und parallel zur Längsachse angeordneten Schnittebene führt. Ein zweifach konkav gekrümmter Druckseitenabschnitt ist zur Vermeidung einer Umströmung der blattwurzelseitigen Hinterkante besonders gut geeignet.

In einer Ausgestaltung ist zwischen einer Tangentialebene an die Druckseite nahe der Hinterkante am dritten Querschnitt und einer Tangentialebene an die Saugseite nahe der Hinterkante am dritten Querschnitt ein spitzer Winkel ausgebildet. Dadurch strömt die Luft im Bereich der Hinterkante gemäß der Kutta'schen Abflussbedingung glatt ab, und eine Umströmung der Hinterkante wird vermieden.

In einer Ausgestaltung verläuft ein hinterer Abschnitt der Saugseite im zweiten Längsabschnitt, der dem zweifach konkav gekrümmten Abschnitt der Druckseite gegenüberliegt, in Querschnittsrichtung des Rotorblatts annähernd geradlinig. Insbesondere kann dieser Abschnitt der Saugseite einfach konkav gekrümmt sein. Ein geradliniger Verlauf in Querschnittsrichtung ist Modellrechnungen zufolge aerodynamisch besonders vorteilhaft, zudem einfach zu fertigen und unter Festigkeitsgesichtspunkten günstig.

Die Erfindung wird nachfolgend anhand von zwei in Figuren dargestellten Ausführungsbeispielen näher erläutert. Es zeigen;
- Fig. 1: eine Draufsicht auf die Saugseite eines erfmdungsgemäßen Rotorblatts,
- Fig. 2: eine Draufsicht auf die Saugseite eines herkömmlichen Rotorblatts nach dem Stand der Technik,
- Fig. 3: eine perspektivische Ansicht eines Ausschnitts des Rotorblatts aus Fig. 1,
- Fig. 4: eine weitere perspektivische Ansicht eines Ausschnitts des Rotorblatts aus Fig. 1,
- Fig. 5: eine Draufsicht auf die Hinterkante eines Ausschnitts des Rotorblatts aus Fig. 1,
- Fig. 6: eine der Fig. 5 entsprechende Draufsicht mit weiteren Hervorhebungen,
- Fig. 7: eine Draufsicht auf die Druckseite eines Ausschnitts des Rotorblatts aus Fig. 1,
- Fig. 8: eine Draufsicht auf die Saugseite eines Ausschnitts des Rotorblatts aus Fig. 1,
- Fig. 9: einen Querschnitt durch das Rotorblatt aus Fig. 1 in einer 2 Meter von der Rotorachse entfernten Schnittebene,
- Fig. 10: einen Querschnitt durch das Rotorblatt aus Fig. 1 in einer 2,5 Meter von der Rotorachse entfernten Schnittebene,
- Fig. 11: einen Querschnitt durch das Rotorblatt aus Fig. 1 in einer 3 Meter von der Rotorachse entfernten Schnittebene,
- Fig. 12: einen Querschnitt durch das Rotorblatt aus Fig. 1 in einer 3,5 Meter von der Rotorachse entfernten Schnittebene,
- Fig. 13: einen Querschnitt durch das Rotorblatt aus Fig. 1 in einer 4 Meter von der Rotorachse entfernten Schnittebene,
- Fig. 14: einen Querschnitt durch das Rotorblatt aus Fig. 1 in einer 5 Meter von der Rotorachse entfernten Schnittebene,
- Fig. 15: einen Querschnitt durch das Rotorblatt aus Fig. 1 in einer 6 Meter von der Rotorachse entfernten Schnittebene,
- Fig. 16: einen Querschnitt durch das Rotorblatt aus Fig. 1 in einer 7 Meter von der Rotorachse entfernten Schnittebene,

- Fig. 17: einen Querschnitt durch das Rotorblatt aus Fig. 1 in einer 8 Meter von der Rotorachse entfernten Schnittebene,
- Fig. 18: einen Querschnitt durch das Rotorblatt aus Fig. 1 in einer 9 Meter von der Rotorachse entfernten Schnittebene,
- Fig. 19: einen Querschnitt durch das Rotorblatt aus Fig. 1 in einer 10 Meter von der Rotorachse entfernten Schnittebene,
- Fig. 20: die Querschnitte der Figuren 9 bis 19 in einer gemeinsamen Darstellung,
- Fig. 21: eine Darstellung der Stromlinien in einer Querschnittsebene durch das Rotorblatt gemäß Fig. 13,
- Fig. 22: einen Querschnitt durch ein weiteres Ausführungsbeispiel eines erfindungsgemäßen Rotorblatts mit einem schalenförmigen Anbauteil.

In allen Figuren werden für gleiche Teile die gleichen Bezugszeichen verwendet.

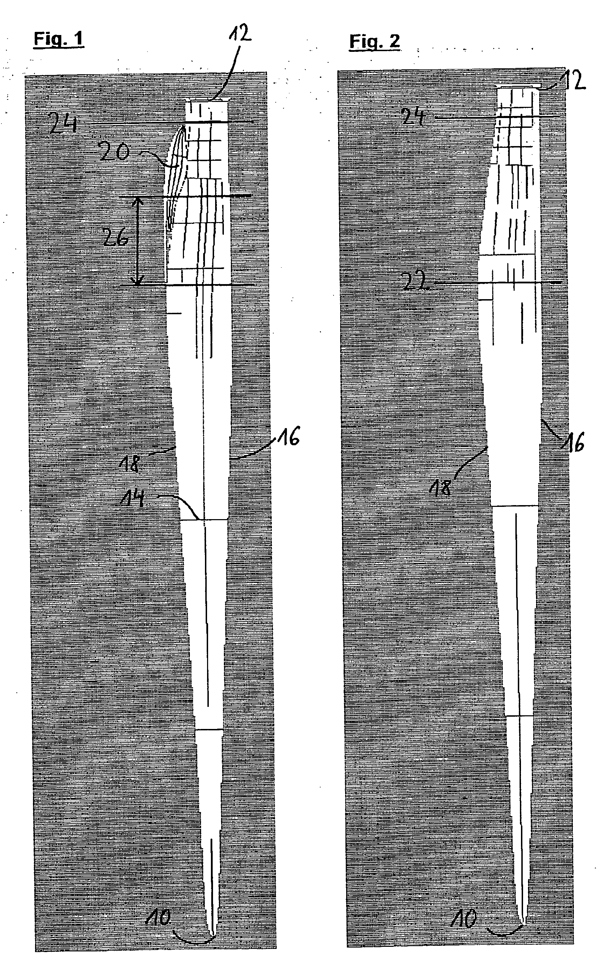

In der Fig. 1 ist das gesamte Rotorblatt in einer Draufsicht auf die Saugseite dargestellt. Es weist von der Blattspitze 10 bis zur Blattwurzel 12 eine Länge von knapp 50 Metern auf. An der Blattwurzel 12 weist das Rotorblatt einen kreisförmigen Querschnitt auf. Die Blattwurzel 12 weist einen kreisförmigen, in den Figuren nicht dargestellten Befestigungsflansch auf, der an einer Rotornabe befestigt wird. Die Blattwurzel 12 befindet sich dann in einem Abstand von ungefähr 1,5 m von der Rotorachse.

Über den Großteil seiner Länge weist das Rotorblatt im Querschnitt ein aerodynamisches Profil auf, insbesondere in der Mitte 14 des Rotorblatts. Die Vorderkante 16 des Rotorblatts befindet sich in der Darstellung der Fig. 1 im Wesentlichen am rechten Rand des dargestellten Rotorblatts, die Hinterkante 18 wird vom linken Rand des Rotorblatts gebildet.

In einem Längsabschnitt des Rotorblatts ist ein Anbauteil 20 angeordnet, das in diesem Längsabschnitt die Hinterkante 18 bildet. Die Form des Anbauteils 20 wird weiter unten im Einzelnen beschrieben.

Fig. 2 zeigt ein herkömmliches Rotorblatt nach dem Stand der Technik, das mit einem Anbauteil 20 zu einem erfindungsgemäßen Rotorblatt gemäß Fig. 1 ergänzt werden kann. Soweit die Erfindung durch Verbinden des Anbauteils 20 mit einem herkömmlichen Rotorblatt beispielsweise gemäß Fig. 2 verwirklicht wird, bildet das herkömmliche Rotorblatt im Sprachgebrauch dieser Anmeldung die übrigen Komponenten des Rotorblatts. Das Anbauteil 20 kann mit diesen übrigen Komponenten beispielsweise verklebt und/oder verschraubt werden.

Ein Vergleich der Figuren 1 und 2 zeigt, dass sich das erfindungsgemäße Rotorblatt mit Anbauteil 20 gemäß Fig. 1 unter anderem im Verlauf seiner Profiltiefe von dem herkömmlichen Rotorblatt gemäß Fig. 2 unterscheidet. Beim herkömmlichen Rotorblatt gemäß Fig. 2 nimmt die Profiltiefe beginnend von der Blattspitze 10 in Richtung zur Blattwurzel 12 hin zunächst monoton zu, bis an der mit 22 gekennzeichneten Längsposition eine maximale Profiltiefe erreicht ist. Beginnend von der Längsposition 22 nimmt die Profiltiefe zur Blattwurzel 12 hin wieder ab, wobei das aerodynamische Profil an einem mit 24 gekennzeichneten, dritten Querschnitt in den kreisförmigen Querschnitt, den es auch im Bereich der Blattwurzel 12 aufweist, übergeht. Der Übergang der Profiltiefe erfolgt kontinuierlich entlang einer stetig differenzierbaren Kurve. Bei der Erfindung gemäß Fig. 1 weist die Profiltiefe von der Blattspitze 10 bis zur Längsposition 22 mit maximaler Profiltiefe denselben Verlauf auf wie in Fig. 2. Von der Längsposition 22 zur Blattwurzel hin bleibt die Profiltiefe jedoch zunächst in dem Längsabschnitt 26 konstant, um sich danach bis auf den kreisförmigen Querschnitt zu verringern. Der Übergang vom aerodynamischen Profil zum kreisförmigen Querschnitt erfolgt wiederum an dem dritten Querschnitt 24, wobei sich die Profiltiefe an dieser Position unter Ausbildung eines Knicks ändert. Die die Hinterkante 18 beschreibende Kurve ist an diesem Punkt somit nicht stetig differenzierbar.

Der Längsabschnitt 26 mit konstanter Profiltiefe erstreckt sich ungefähr über einen Bereich zwischen einem ersten Abstand von 10 % der Rotorblattlänge von der Blattwurzel und einem zweiten Abstand von ungefähr 20 % der Rotorblattlänge von der Blattwurzel.

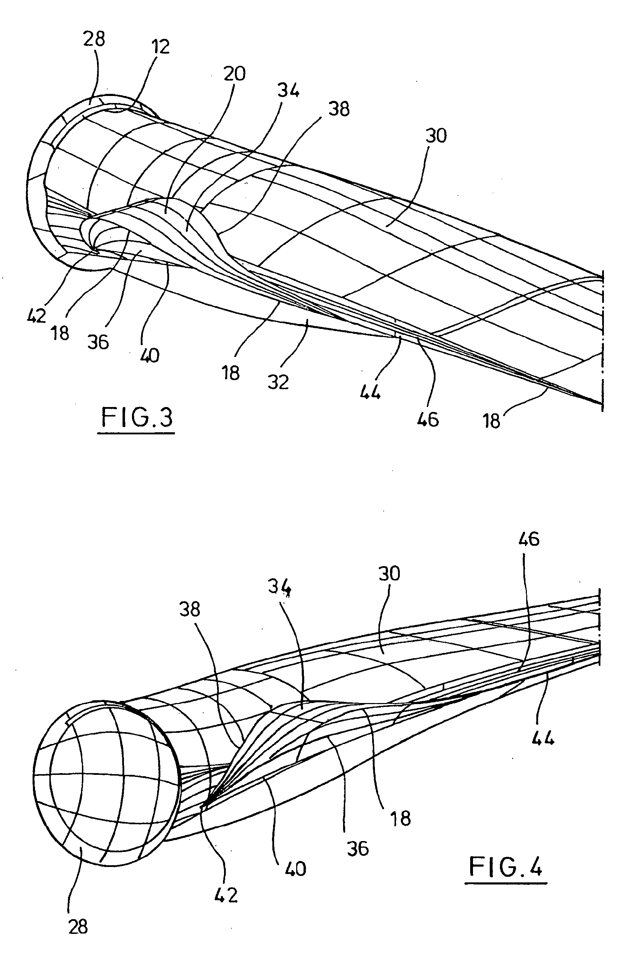

In der perspektivischen Ansicht der Fig. 3 ist die Form des Anbauteils genauer zu erkennen. Der dargestellte Ausschnitt des Rotorblatts beginnt an der Blattwurzel 12 und zeigt ungefähr das blattwurzelseitige Drittel des Rotorblatts. Die Darstellung entstammt ebenso wie die Figuren 4 bis 8 einer aerodynamischen Modellrechnung, in der die Nabe des Rotors durch eine Kugel 28 abgebildet wird. Ein Teil dieser Kugel 28 ist in den Figuren 3 bis 8 mit dargestellt, gehört jedoch nicht zum Rotorblatt. Man erkennt in der Fig. 3 den kreisförmigen Querschnitt des Rotorblatts im Bereich der Blattwurzel 12 und kann am rechten Rand der Figur das aerodynamische Profil des Rotorblatts, das im Wesentlichen demjenigen einer Flugzeugtragfläche entspricht, erahnen. Die in der Darstellung oben befindliche Seite des Rotorblatts ist die Saugseite 30, die Druckseite 32 befindet sich an der Unterseite und ist in der Fig. 3 nur teilweise sichtbar.

Ein Teil der Saugseite 30 und ein Teil der Druckseite 32 werden von dem Anbauteil 20 gebildet. Hierzu umfasst das Anbauteil 20 eine einfach konvex gekrümmte Saugseitenergänzungsfläche 34 sowie eine zweifach konkav gekrümmte Druckseitenergänzungsfläche 36. Die Saugseitenergänzungsfläche 34 und die Druckseitenergänzungsfläche 36 laufen an der Hinterkante 18 unter Ausbildung eines spitzen Winkels zusammen. Die Saugseitenergänzungsfläche 34 geht an einer gekrümmten Linie 38 in die von den übrigen Komponenten des Rotorblatts gebildeten Teile der Saugseite 30 über. Die Druckseitenergänzungsfläche 36 geht an einer weiteren gekrümmten Linie 40 in die von den übrigen Komponenten des Rotorblatts gebildeten Teile der Druckseite 32 über.

Von der Blattwurzel 12 aus betrachtet beginnt das Anbauteil 20 an einem Punkt 42, an dem die gekrümmten Linien 38 und 40 sowie die Hinterkante 18 zusammenlaufen. Das Anbauteil endet an einem weiteren Punkt 44, an dem die gekrümmten Linien 38 und 40 sowie die Hinterkante 18 ein weiteres Mal zusammenlaufen. Der Punkt 42 bildet das blattwurzelseitige Ende des Anbauteils 20. Der Punkt 44 bildet das blattspitzenseitige Ende des Anbauteils 20. Bei 46 weisen die die übrigen Komponenten des Rotorblatts eine dicke Hinterkante auf, d.h. in diesem Bereich wird die Hinterkante der übrigen Komponenten des Rotorblatts von einer im Wesentlichen senkrecht zur Anströmrichtung liegenden Fläche gebildet. Im Bereich des Anbauteils 20 bildet diese Fläche jedoch nicht die Hinterkante 18 des Rotorblatts, die von dem Anbauteil 20 gebildet ist.

Statt mit Hilfe eines Anbauteils 20 kann die erfindungsgemäße Rotorblattgeometrie bereits bei der Konstruktion eines neuen Rotorblatts berücksichtigt werden. In diesem Fall können beispielsweise die Ober- und Unterschalen jeweils einteilig mit einer Saugseitenergänzungsfläche 34 und einer Druckseitenergänzungsfläche 36 gefertigt werden.

Fig. 4 zeigt eine weitere perspektivische Ansicht auf den Rotorblattausschnitt der Fig. 3. Besonders gut erkennbar ist der blattwurzelseitige Teil der Saugseitenergänzungsfläche 34, der im Punkt 42, der das blattwurzelseitige Ende des Anbauteils 20 markiert, spitz ausläuft. Ebenfalls erkennbar ist, dass die gekrümmte Linie 38, die den Übergang der Saugseitenergänzungsfläche 34 in die von den übrigen Komponenten des Rotorblatts gebildeten Teile der Saugseite 30 markiert, bezogen auf die Profiltiefe relativ weit hinten angeordnet ist. Sie befindet sich an jeder Längsposition des Rotorblatts deutlich hinter der Dickenrücklage des Profils.

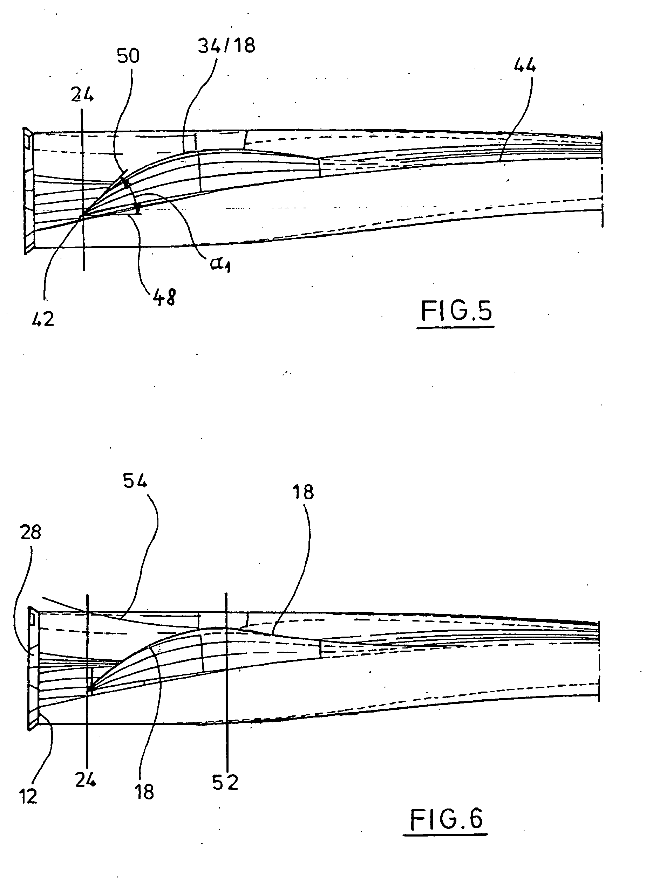

In der Draufsicht der Fig. 5 ist die Hinterkante 18 des Rotorblatts erkennbar. Soweit sie von dem Anbauteil 20 gebildet ist, verläuft die zur Hinterkante 18 führende Saugseitenergänzungsfläche 34 senkrecht zur Zeichenebene, so dass sie hinter der Hinterkante 18 verschwindet. Die Druckseitenergänzungsfläche 36 ist hingegen gut erkennbar. Ebenfalls erkennbar ist das blattwurzelseitige Ende des Anbauteils 20 am Punkt 42 sowie das blattspitzenseitige Ende des Anbauteils 20 am Punkt 44. In der Darstellung der Fig. 5 verläuft die Zeichenebene senkrecht zur Rotorebene, wobei ein Pitchwinkel des Rotorblatts entsprechend dem für den Teillastbetrieb optimierten Pitchwinkel vorausgesetzt ist. Der eingezeichnete Winkel α₁ wird in der Zeichenebene, also in einer senkrecht zur Rotorebene und parallel zur Längsachse des Rotorblatts angeordneten Ebene, gemessen. Er ist zwischen der Rotorebene, deren Richtung bei 48 angedeutet ist, und der Tangentialebene 50 definiert. Die Tangentialebene 50 ist an die Druckseite angelegt und zwar an der Hinterkante 18 am dritten Querschnitt 24, d.h. im Wesentlichen am Punkt 42. Der Winkel α₁ liegt zweckmäßigerweise in einem Bereich von 30° bis 90°. Im dargestellten Ausführungsbeispiel beträgt er ungefähr 45°.

Fig. 6 zeigt die gleiche Ansicht wie die Fig. 5, es ist jedoch der Verlauf der Hinterkante 18 hervorgehoben. In der Projektion auf die dargestellte Zeichenebene, d.h. auf eine senkrecht zur Rotorebene und parallel zur Längsachse des Rotorblatts angeordnete Ebene, steigt die Hinterkante 18 von der Blattspitze 10 ausgehend zunächst streng monoton an, bis sie an einem zweiten Querschnitt 52 ein Maximum erreicht, und fällt dann zur Blattwurzel 12 hin bis zum dritten Querschnitt 24 streng monoton ab. Im Bereich zwischen dem zweiten Querschnitt 52 und dem dritten Querschnitt 24 folgt der Verlauf der Hinterkante 18 und damit die Ausrichtung der Profilsehne nicht der sich immer weiter in Richtung zur Rotorachse hin drehenden Anströmrichtung. Eine dieser sich drehenden Anströmrichtung folgende Hinterkante würde ungefähr den bei 54 gezeigten Verlauf nehmen, wie es beispielsweise bei dem aus der eingangs diskutierten Druckschrift WO 2004/097215 A1 bekannten Rotorblatt der Fall ist.

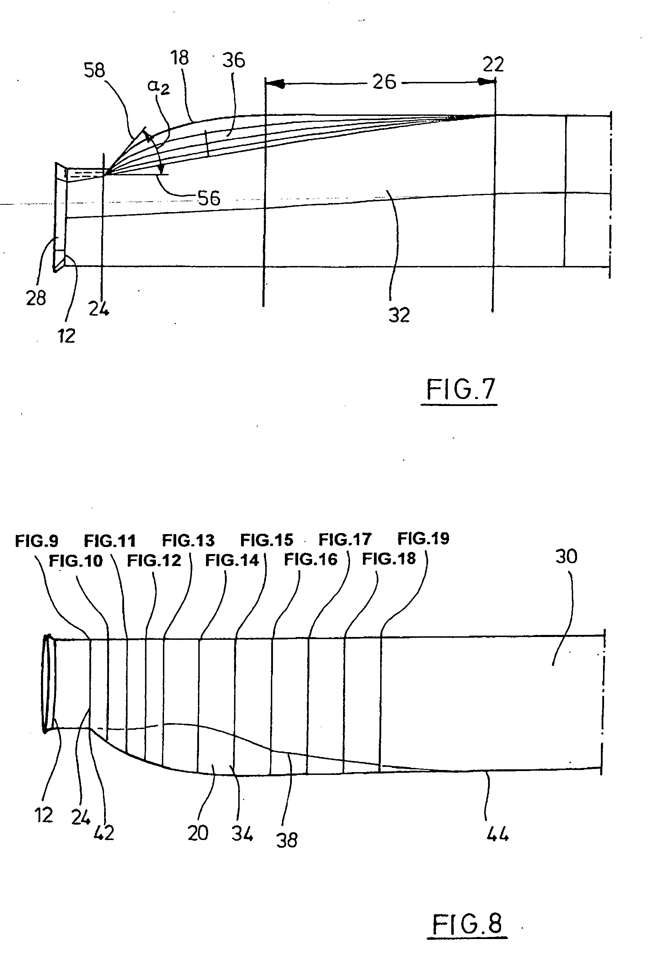

Fig. 7 zeigt eine weitere Draufsicht auf den in den vorherigen Figuren dargestellten Ausschnitt des erfmdungsgemäßen Rotorblatts. Die Zeichenebene ist die Rotorebene, wobei wiederum ein Pitchwinkel entsprechend dem für den Teillastbetrieb optimierten Wert vorausgesetzt ist. Der Blick richtet sich auf die Druckseite 32 des Rotorblatts. Gut erkennbar ist der Längsabschnitt 26, in dem die Profiltiefe des Rotorblatts konstant ist.

Der eingezeichnete Winkel α₂ wird in der Zeichenebene gemessen, d.h. in der Rotorebene. Er ist definiert zwischen der Längsachse des Rotorblatts, die parallel zur Linie 56 verläuft, und der Projektion der Tangente 58 an die Hinterkante des Rotorblatts am dritten Querschnitt 24 auf die Rotorebene. Der Winkel α₂ liegt zweckmäßiger Weise in einem Bereich von 25° bis 90°. Im dargestellten Ausführungsbeispiel beträgt der Winkel α₂ ungefähr 45°. Im Gegensatz zu einem herkömmlichen Rotorblatt gemäß Fig. 2 mündet die Hinterkante 18 im Bereich des dritten Querschnitts 24 unter Ausbildung eines Winkels in den zylindrischen, blattwurzelseitigen Abschnitt des Rotorblatts, nicht in einer stetig differenzierbaren Kurve.

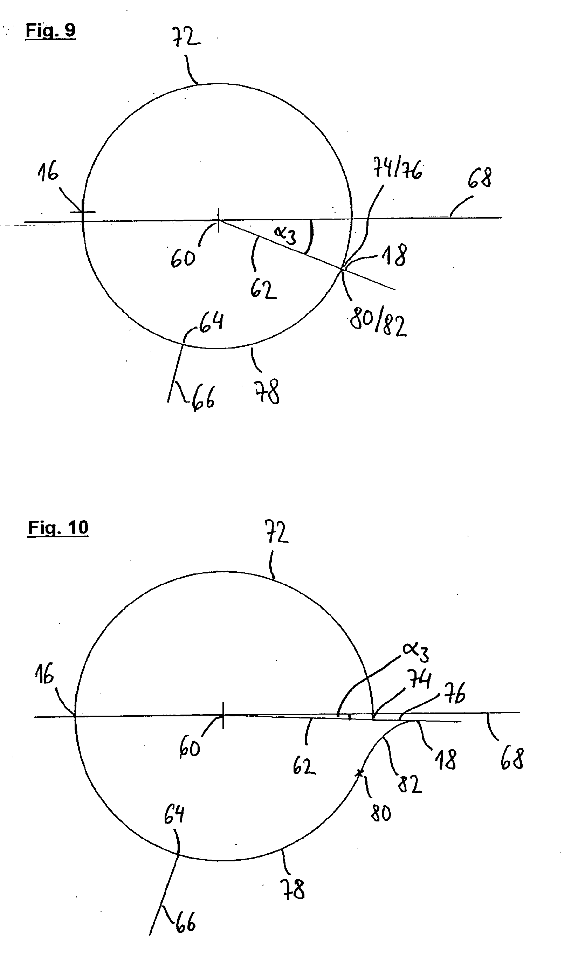

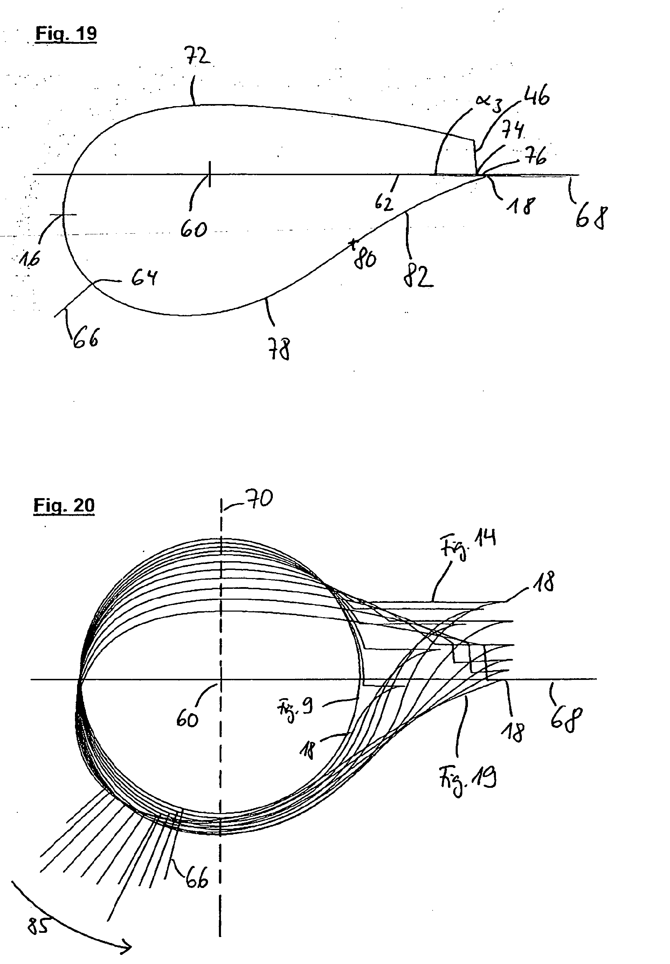

Fig. 8 verdeutlicht anhand einer Draufsicht auf die Saugseite 32 insbesondere die für die Figuren 9 bis 19 gewählten Schnittebenen. Die in diesen Figuren gezeigten Querschnitte decken im Wesentlichen den mit dem Anbauteil 20 versehenen Längsabschnitt des Rotorblatts ab, indem das Rotorblatt ein besonderes Profil aufweist. Der Querschnitt der Fig. 9 verläuft an der Längsposition des bereits erläuterten dritten Querschnitts 24, d.h. am blattwurzelseitigen Ende des Anbauteils 20. Die weiteren Querschnitte der Figuren 10 bis 19 weisen einen zunehmenden Abstand von der Blattwurzel auf, wobei der Querschnitt der Fig. 19 nahe am blattspitzenseitigen Ende des Anbauteils 20, d.h. nahe dem Punkt 44 angeordnet ist. Am Punkt 44, wo das Anbauteil 20 und damit der Längsabschnitt des Rotorblatts mit dem besonderen Profil endet, beträgt die relative Profildicke 60 % oder weniger. Der Punkt 44 ist zudem in einem Abstand von 10 % oder mehr der Rotorblattlänge von der Blattwurzel 12 entfernt.

Der Längsabschnitt des Rotorblatts mit dem besonderen Profil beginnt am dritten Querschnitt 24 in einem Abstand von der Blattwurzel 12 von mindestens 0,5 Metern, im Beispiel in einem Abstand von ungefähr 1 Meter. In der Fig. 8 ebenfalls erkennbar ist die gekrümmte Linie 38, an der die Saugseitenergänzungsfläche 34 in die von den übrigen Komponenten des Rotorblatts gebildeten Teile der Saugseite 30 übergeht.

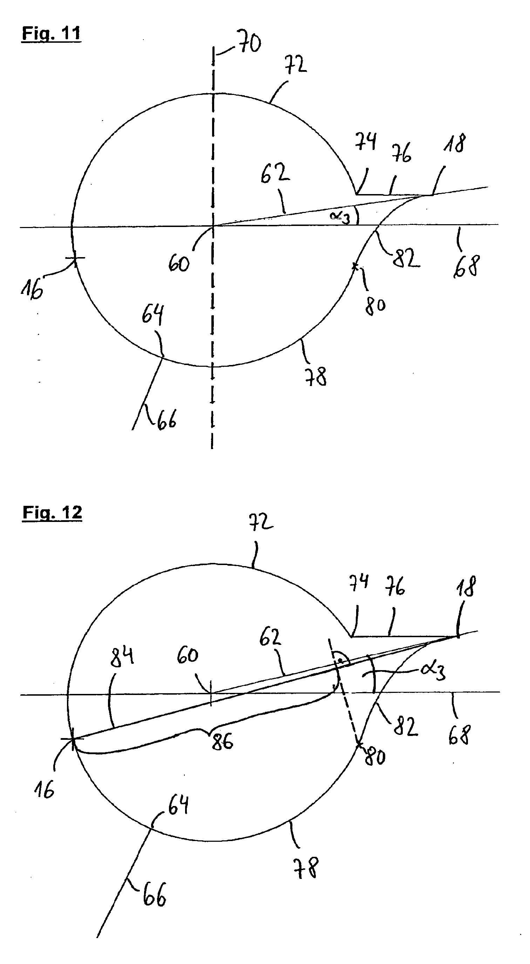

Die Merkmale des besonderen Profils im Bereich des genannten Längsabschnitts werden zunächst anhand der Figur 11 erläutert. In den Querschnitt der Fig. 11 eingezeichnet ist die Position der Längsachse 60 des Rotorblatts etwa in der Mitte des dargestellten Querschnitts, sowie die der Hinterkante 18. Hinterkante 18 und Längsachse 60 werden durch eine Gerade 62 miteinander verbunden. Die Vorderkante 16 des Rotorblatts ist in dem Querschnitt durch ein Kreuz markiert. Weiterhin eingezeichnet ist der vordere Staupunkt 64 des Profils sowie die Auslegungsanströmrichtung 66, die durch eine auf den vorderen Staupunkt 64 weisende Linie gekennzeichnet ist. Weiterhin eingezeichnet ist die Rotorebene 68 als Bezugsebene. Die Rotorebene 68 schließt die Längsachse 60 ein und ist senkrecht zur gestrichelt eingezeichneten Rotorachse 70 ausgerichtet. Es versteht sich, dass die Rotorachse 70 außerhalb der dargestellten Schnittebene liegt.

Das in der Fig. 11 dargestellte Profil weist einen konvexen Saugseitenabschnitt 72 auf, der sich von der Vorderkante 16 bis zu einem saugseitigen Knickpunkt 74 erstreckt. Ein Saugseitenergänzungsabschnitt 76 verläuft geradlinig von dem Knickpunkt 74 zur Hinterkante 18. Die Druckseite des Profils wird gebildet von einem konvexen Druckseitenabschnitt 78, der sich von der Vorderkante 16 bis zu einem druckseitigen Wendepunkt 80 erstreckt, und von einem konkaven Druckseitenergänzungsabschnitt 82, der sich von dem druckseitigen Wendepunkt 80 bis zur Hinterkante 18 erstreckt.

Eine im Bereich der Hinterkante 18 an den konkaven Druckseitenergänzungsabschnitt 82 angelegte Tangente ist im Wesentlichen in Richtung der Rotorebene 68 ausgerichtet. In Richtung der Rotorebene 68 verläuft auch der Saugseitenergänzungsabschnitt 76. Zwischen den an die Hinterkante 18 angrenzenden Enden des Saugseitenergänzungsabschnitts 76 und des Druckseitenergänzungsabschnüts 82 ist ein spitzer Winkel ausgebildet.

Der Winkel α₃ ist definiert zwischen der Rotorebene 68 als Bezugsebene und der Geraden 62. Durch den Winkel α₃ wird die Lage der Hinterkante 18 in dem Querschnitt beschrieben.

Die genannten Merkmale sind auch in den übrigen Querschnitten der Figuren 9 bis 19 vorhanden und mit denselben Bezugszeichen versehen. In der Fig. 12 ist ergänzend die Profilsehne 84 eingezeichnet, die von der Vorderkante 16 zur Hinterkante 18 verläuft. Ebenfalls dargestellt ist die Projektion des druckseitigen Wendepunkts 80 auf die Profilsehne 84. Der mit 86 bezeichnete, entlang der Profilsehne 84 gemessene Abstand 86 des druckseitigen Wendepunkts 80 von der Vorderkante 16 beträgt an der in der Fig. 12 gezeigten Längsposition des Rotorblatts ungefähr 75 % der Profiltiefe.

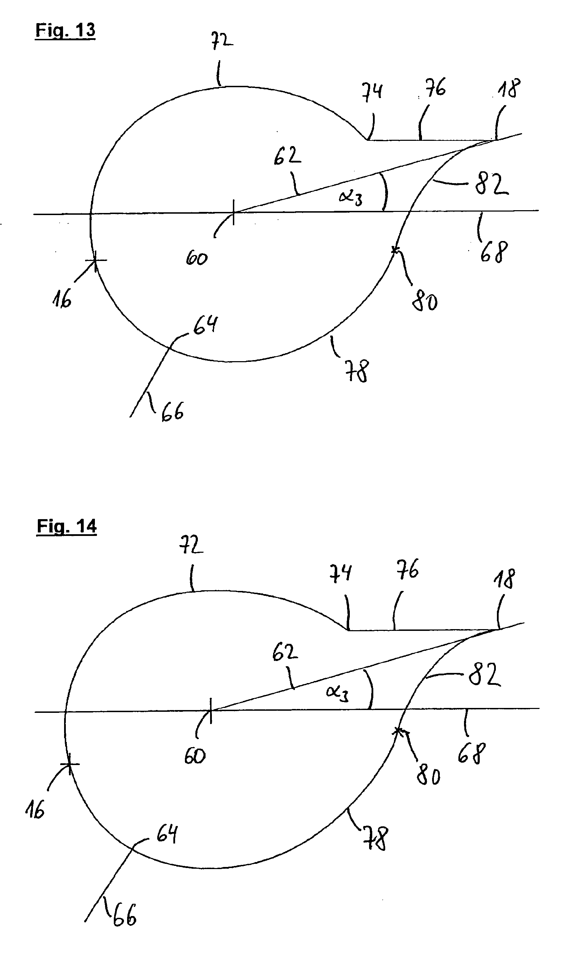

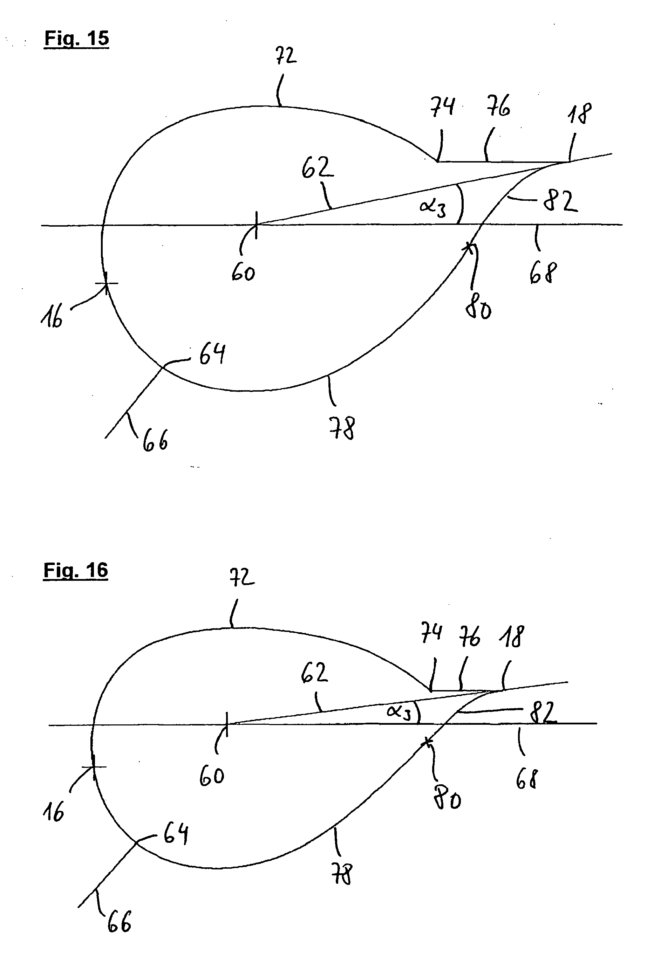

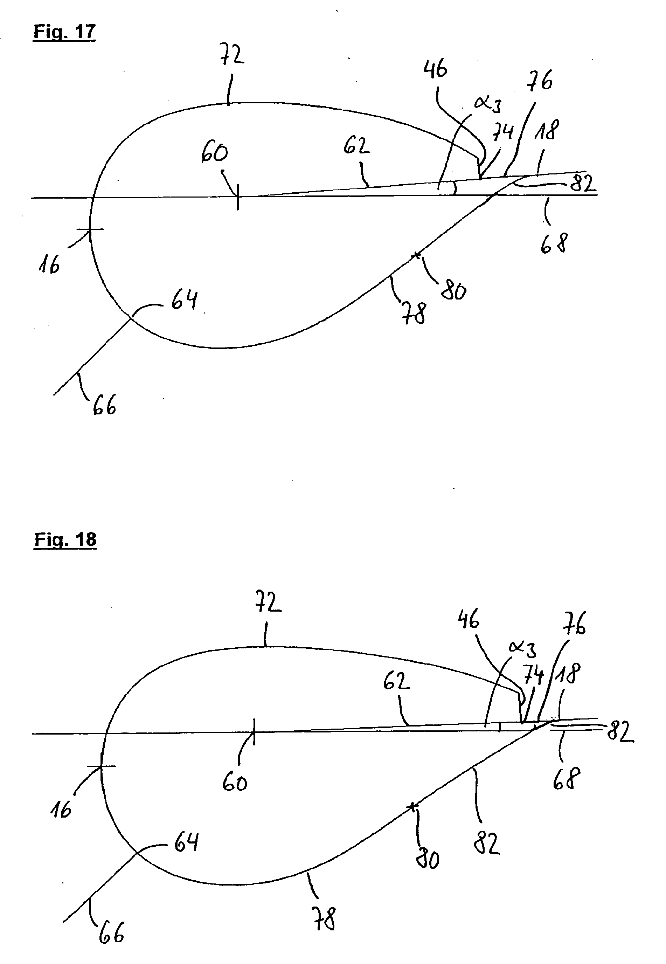

Der Winkel α₃ nimmt an den Längspositionen der in den Figuren 9 bis 19 gezeigten Querschnitte ungefähr die folgenden Werte an: Fig. 9: -22,5°, Fig. 10: - 2°, Fig. 11: 8°, Fig. 12: 13°, Fig. 13: 15,5°, Fig. 14: 16°, Fig. 15: 12°, Fig. 16: 7°, Fig. 17: 3,5°, Fig. 18: 2°, Fig. 19: 0°. Etwa an der Längsposition des Querschnitts der Fig. 14 nimmt der Winkel α₃ somit ein Maximum an. Diese Längsposition entspricht dem zweiten Querschnitt 52. Ausgehend von einer nicht dargestellten Längsposition nahe der Blattspitze nimmt der Winkel α₃ also zur Blattwurzel hin bis zur Längsposition des zweiten Querschnitts 52 streng monoton zu, erreicht am zweiten Querschnitt 52 ein Maximum und nimmt dann bis zum dritten Querschnitt 24 hin streng monoton ab.

Der Querschnitt der Fig. 19 befindet sich an einer Längsposition des Rotorblatts nahe dem blattspitzenseitigen Ende des Anbauteils 20. In dieser Position beträgt die relative Profildicke ungefähr 50 %.

In den Fig. 17, 18 und 19 ist weiterhin die "dicke Hinterkante" der übrigen Komponenten des Rotorblatts erkennbar und mit dem Bezugszeichen 46 versehen. Sie ist zu unterscheiden von der Hinterkante 18 des Rotorblatts.

In der Fig. 20 sind die Querschnitte der Figuren 9 bis 19 mit übereinander liegender Längsachse 60 dargestellt. In dieser Darstellung ist der Übergang von einem annähernd kreisförmigen Querschnitt, wie er in der Fig. 9 dargestellt ist, zu dem Querschnitt der Fig. 19, der bereits weitgehend einem tragflächenartigen, aerodynamischen Profil entspricht, erkennbar. Ebenfalls erkennbar ist die sich mit geringer werdendem Abstand von der Blattwurzel weiter in Richtung zur Rotorachse 70 hin drehende Auslegungsanströmrichtung 66. Dieses Drehen der Auslegungsanströmrichtung 66 ist durch den Pfeil 85 veranschaulicht. Weiterhin lässt sich der Darstellung der Fig. 20 der geschwungene Verlauf der Hinterkante 18, die im Querschnitt der Fig. 14 ein Maximum erreicht, entnehmen.

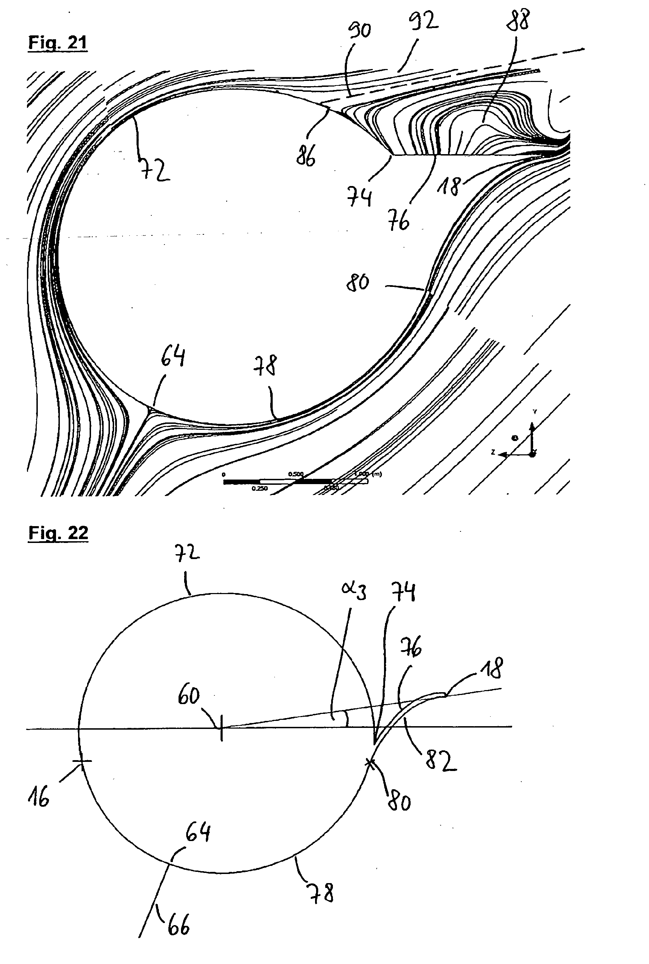

Fig. 21 zeigt in einer Querschnittsebene die sich im Betrieb ausbildende Luftströmung um das Rotorblatt herum. Gut erkennbar ist der vordere Staupunkt 64, an dem sich die Luft in einen über die Saugseite und einen über die Druckseite abströmenden Teil teilt. Im Bereich der Druckseite liegt die Strömung weitestgehend am Profil an. An der Hinterkante 18 strömt sie glatt in Richtung der Rotorebene ab, wiederum bei dem für den Teillastbetrieb optimierten Pitchwinkel. Oberhalb des geradlinigen Saugseitenergänzungsabschnitts 76, beginnend etwa ab dem Punkt 86 des konvexen Saugseitenabschnitts 72, kommt es zu Strömungsablösungen und zur Ausbildung eines verwirbelten Bereichs 88. Die Trennstromlinie 90 trennt den verwirbelten Bereich 88 von der im größeren Abstand vom Saugseitenergänzungsabschnitt 76 wieder laminar verlaufenden Strömung im Bereich 92. Die Trennstromlinie 90 verläuft annähernd parallel zum Saugseitenergänzungsabschnitt 76 und zur Rotorebene.

In der Fig. 22 ist ein weiteres Ausführungsbeispiel eines Rotorblatts in einem Querschnitt gezeigt. Der Querschnitt weist die bereits erläuterten Merkmale auf, die mit den gleichen Bezugszeichen wie im ersten Ausführungsbeispiel bezeichnet sind. Das Anbauteil 20, das die Saugseitenergänzungsfläche 76 und die Druckseitenergänzungsfläche 82 aufweist, ist von einem schalenförmigen Bauteil gebildet. Das schalenförmige Bauteil hat eine gleichmäßige Dicke, so dass sich die Saugseitenergänzungsfläche 76 und die Druckseitenergänzungsfläche 82 in einem konstanten Abstand voneinander befinden. Der Übergang vom Anbauteil 20 zu den übrigen Komponenten des Rotorblatts verläuft am druckseitigen Wendepunkt 80 krümmungsstetig, am saugseitigen Knickpunkt 74 unter Ausbildung eines nach innen weisenden Knicks.

## Patentansprüche

1. Windenergieanlagenrotorblatt mit einer Längsachse (60), einer Blattspitze (10), einer Blattwurzel (12), einer Vorderkante (16), einer Hinterkante (18), einer Druckseite (32), einer Saugseite (30) und einem orthogonal zur Längsachse (60) angeordneten, sich von der Blattwurzel (12) zur Blattspitze (10) hin ändernden Querschnitt, der an der Blattwurzel (12) im Wesentlichen kreisförmig und in der Mitte (14) des Rotorblatts von einem aerodynamischen Profil gebildet ist, und einer gedachten, bezüglich des Rotorblatts fest angeordneten Bezugsebene, die die Längsachse (60) des Rotorblatts einschließt, wobei in einem Querschnitt ein Winkel α₃ zwischen der Bezugsebene und einer Geraden (62), die die Längsachse (60) mit der Hinterkante (18) verbindet, definiert ist und die Lage der Hinterkante (18) beschreibt, wobei der Winkel α₃ in einem ersten Längsabschnitt des Rotorblatts mit abnehmendem Abstand von der Blattwurzel (12) zunimmt und in einem zweiten Längsabschnitt, der näher an der Blattwurzel (12) angeordnet ist als der erste Längsabschnitt, mit abnehmendem Abstand von der Blattwurzel (12) abnimmt, wobei der erste Längsabschnitt an einem ersten Querschnitt beginnt und sich über einen Großteil der Rotorblattlänge bis zu einem zweiten Querschnitt (52) erstreckt, der weniger als 25% der Rotorblattlänge von der Blattwurzel (12) entfernt ist, und ein hinterer Abschnitt der Druckseite (32) im zweiten Längsabschnitt eine erste konkave Krümmung in einer Querschnittsebene durch das Rotorblatt aufweist, **dadurch gekennzeichnet, dass** der hintere Abschnitt der Druckseite (32) im zweiten Längsabschnitt zweifach konkav gekrümmt ist mit einer zweiten konkaven Krümmung in einer Schnittebene, die senkrecht zur Rotorebene (68) und parallel zur Längsachse (60) angeordnet ist.

2. Windenergieanlagenrotorblatt nach Anspruch 1, **dadurch gekennzeichnet, dass** der zweite Längsabschnitt an dem zweiten Querschnitt (52) unmittelbar an den ersten Längsabschnitt angrenzt, wobei der Winkel α₃ in dem zweiten Querschnitt (52) ein Maximum aufweist.

3. Windenergieanlagenrotorblatt nach Anspruch 1 oder 2, **dadurch gekennzeichnet, dass** der zweite Längsabschnitt sich in Richtung zu der Blattwurzel (12) hin bis zu einem dritten Querschnitt (24) erstreckt, der an einer Längsposition des Rotorblatts angeordnet ist, an der das aerodynamisch wirksame Profil des Rotorblatts endet.

4. Windenergieanlagenrotorblatt nach Anspruch 3, **dadurch gekennzeichnet, dass** der dritte Querschnitt (24) in einem Abstand von 0,5 m oder mehr von der Blattwurzel (12) angeordnet ist.

5. Windenergienanlagenrotorblatt nach Anspruch 3 oder 4, **dadurch gekennzeichnet, dass** das Windenergieanlagenrotorblatt eine Auslegungsschnelllaufzahl aufweist und in einem Teillastbetrieb bevorzugt mit einem vorgegebenen, optimalen Pitchwinkel betrieben wird, der bei der Auslegungsschnelllaufzahl zu einer optimalen Leistungsaufnahme aus dem wind führt, und dass ein Winkel α₁ in einer senkrecht zur Rotorebene und parallel zur Längsachse (60) des Rotorblatts angeordneten Ebene zwischen der Rotorebene (48) und einer Tangentialebene (50) an die Druckseite (32) an der Hinterkante (18) am dritten Querschnitt (24) definiert ist, wenn das Rotorblatt den für den Teillastbetrieb optimierten Pitchwinkel aufweist, und dass der Winkel α₁ im Bereich von 30° bis 90° liegt.

6. Windenergienanlagenrotorblatt nach einem der Ansprüche 3 bis 5, **dadurch gekennzeichnet, dass** das Windenergieanlagenrotorblatt eine Auslegungsschnelllaufzahl aufweist und in einem Teillastbetrieb bevorzugt mit einem vorgegebenen, optimalen Pitchwinkel betrieben wird, der bei der Auslegungsschnelllaufzahl zu einer optimalen Leistungsaufnahme aus dem wind führt, und dass ein Winkel α₂ in der Rotorebene zwischen der Längsachse (60) des Rotorblatts und der Projektion auf die Rotorebene einer Tangente (58) an die Hinterkante (18) des Rotorblatts am dritten Querschnitt (24) definiert ist, wenn das Rotorblatt den für den Teillastbetrieb optimierten Pitchwinkel aufweist, und dass der Winkel α₂ im Bereich von 25° bis 90° liegt.

7. Windenergieanlagenrotorblatt nach einem der Ansprüche 3 bis 6, **dadurch gekennzeichnet, dass** zwischen einer Tangentialebene an die Druckseite (32) an der Hinterkante (18) am dritten Querschnitt (24) und einer Tangentialebene an die Saugseite (30) an der Hinterkante (18) am dritten Querschnitt (24) ein spitzer Winkel ausgebildet ist.

8. Windenergieanlagenrotorblatt nach einem der Ansprüche 1 bis 7, **dadurch gekennzeichnet, dass** ein hinterer Abschnitt der Saugseite (30) im zweiten Längsabschnitt, der dem zweifach konkav gekrümmten Abschnitt der Druckseite (32) gegenüberliegt, in Querschnittsrichtung des Rotorblatts annähernd geradlinig verläuft.

## Claims

1. A wind turbine rotor blade with a longitudinal axis (60), a blade tip (10), a blade root (12), a leading edge (16), a trailing edge (18), a pressure side (32), a suction side (30) and a cross-section arranged orthogonally to the longitudinal axis (60) and changing from the blade root (12) to the blade tip (10), the cross-section being formed at the blade root (12) mainly in a circular manner and in the middle (14) of the rotor blade by an aerodynamic profile, and an imaginary reference plane permanently arranged with respect to the rotor blade and including the longitudinal axis (60) of the rotor blade, wherein in a cross-section an angle α₃ is defined between the reference plane and a straight line (62), which connects the longitudinal axis (60) with the trailing edge (18), and describes the position of the trailing edge (18), wherein the angle α₃ increases with decreasing distance from the blade root (12) in a first longitudinal section of the rotor blade and decreases with decreasing distance from the blade root (12) in a second longitudinal section, which is arranged closer to the blade root (12) than the first longitudinal section, wherein the first longitudinal section begins at first cross-section and extends over a bulk of a rotor blade length up to a second cross-section (52), which is spaced from the blade root (12) by less than 25% of the rotor blade length, and wherein a rear portion of the pressure side (32) in the second longitudinal section has a first concave curvature in a cross sectional plane through the rotor blade, **characterized in that** the rear portion of the pressure side (32) in the second longitudinal section is double concavely curved with a second concave curvature in a sectional plane which is arranged perpendicular to a rotor plane (68) and parallel to the longitudinal axis (60).

2. The wind turbine rotor blade according to claim 1, **characterized in that** the second longitudinal section at the second cross-section (52) is directly adjacent to the first longitudinal section, wherein the angle α₃ has a maximum in the second cross-section (52).

3. The wind turbine rotor blade according to claim 1 or 2, **characterized in that** the second longitudinal section extends in the direction of the blade root (12) up to a third cross-section (24), which is arranged at a longitudinal position of the rotor blade where the aerodynamically effective profile of the rotor blade ends.

4. The wind turbine rotor blade according to claim 3, **characterized in that** the third cross-section (24) is arranged at a distance of 0.5 m or more from the blade root (12).

5. Wind turbine rotor blade according to claim 3 or 4, **characterized in that** the wind turbine rotor blade comprises a design tip speed ratio and in partial load operation is operated preferably with a predetermined, optimal pitch angle which at the design tip speed ratio leads to an optimal power consumption from the wind, and **in that** an angle α₁ is defined in a plane arranged perpendicular to the rotor plane and parallel to the longitudinal axis (60) of the rotor blade between the rotor plane (48) and a tangential plane (50) on the pressure side (32) at the trailing edge (18) at the third cross-section (24) if the rotor blade has the pitch angle optimized for partial load operation, and **in that** the angle α₁ lies in the range of 30° to 90°.

6. Wind turbine rotor blade according to any of the claims 3 to 5, **characterized in that** the wind turbine rotor blade comprises a design tip speed ratio and in partial load operation is operated preferably with a predetermined, optimal pitch angle which at the design tip speed ratio leads to an optimal power consumption from the wind, and **in that** an angle α₂ is defined in the rotor plane between the longitudinal axis (60) of the rotor blade and the projection onto the rotor plane of a tangent (58) to the trailing edge (18) of the rotor blade at the third cross-section (24) if the rotor blade has the pitch angle optimized for partial load operation, and **in that** the angle α₂ lies in the range of 25° to 90°.

7. The wind turbine rotor blade according to any of the claims 3 to 6, **characterized in that** an acute angle is formed between a tangential plane on the pressure side (32) at the trailing edge (18) at the third cross-section (24) and a tangential plane on the suction side (30) at the trailing edge (18) at the third cross-section (24).

8. Wind turbine rotor blade according to any of the claims 1 to 7, **characterized in that** a rear portion of the suction side (30) in the second longitudinal portion runs in an almost straight line in the cross-sectional direction of the rotor blade, the rear portion of the suction side (30) lying opposite the double concavely curved portion of the pressure side (32).

## Revendications

1. Pale de rotor d'éolienne, avec un axe longitudinal (60), une pointe de pale (10), un pied de pale (12), un bord avant (16), un bord arrière (18), un côté pression (32), un côté aspiration (30) et une section transversale qui est disposée de façon orthogonale à l'axe longitudinal (60), qui varie du pied de pale (12) à la pointe de pale (10) et qui est essentiellement circulaire au niveau du pied de pale (12) et est formée, au milieu (14) de la pale de rotor, d'un profil aérodynamique, et avec un plan de référence imaginaire, disposé de façon fixe relativement à la pale de rotor, qui inclut l'axe longitudinal (60) de la pale de rotor, un angle α3 étant défini dans une section transversale entre le plan de référence et une droite (62) qui relie l'axe longitudinal (60) au bord arrière (18) et décrivant la position du bord arrière (18), l'angle α3 augmentant dans un premier tronçon longitudinal de la pale de rotor quand la distance au pied de pale (12) diminue, et diminuant dans un deuxième tronçon longitudinal, qui est disposé plus près du pied de pale (12) que la premier tronçon longitudinal, quand la distance au pied de pale (12) diminue, le premier tronçon longitudinal commençant au niveau d'une première section transversale et s'étendant sur une grande partie de la longueur de pale de rotor jusqu'à une deuxième section transversale (52) qui est éloignée du pied de pale (12) d'une distance inférieure à 25% de la longueur de pale de rotor, et un tronçon arrière du côté pression (32) présentant dans le deuxième tronçon longitudinal une première courbure concave dans un plan de coupe transversal à travers la pale de rotor, **caractérisée en ce que** le tronçon arrière du côté pression (32) dans le deuxième tronçon longitudinal est courbé de façon doublement concave avec une deuxième courbure concave dans un plan de coupe qui est disposé perpendiculairement au plan de rotor (68) et parallèlement à l'axe longitudinal (60).

2. Pale de rotor d'éolienne selon la revendication 1, **caractérisée en ce que** le deuxième tronçon longitudinal sur la deuxième section transversale (52) jouxte directement le premier tronçon longitudinal , l'ange α3 présentant un maximum dans la deuxième section transversale (52).

3. Pale de rotor d'éolienne selon la revendication 1 ou 2, **caractérisée en ce que** le deuxième tronçon longitudinal s'étend en direction du pied de pale (12) jusqu'à une troisième section transversale (24) qui est disposée au niveau d'une position longitudinale de la pale de rotor au niveau de laquelle se termine le profil aérodynamiquement efficace de la pale de rotor.

4. Pale de rotor d'éolienne selon la revendication 3, **caractérisée en ce que** la troisième section transversale (24) est disposée à une distance de 0,5 m ou plus du pied de pale (12).

5. Pale de rotor d'éolienne selon la revendication 3 ou 4, **caractérisée en ce que** la pale de rotor d'éolienne présente une vitesse spécifique de calcul et fonctionne dans une marche en charge partielle de préférence avec un angle de pas optimal prédéfini qui, à la vitesse spécifique de calcul, conduit à une puissance absorbée optimale à partir du vent, et **en ce qu'**un angle α1 est défini, dans un plan disposé perpendiculairement au plan de rotor et parallèlement à l'axe longitudinal (60) de la pale de rotor, entre le plan de rotor (48) et un plan tangentiel (50) au côté pression (32) sur le bord arrière (18) sur la troisième section transversale (24) quand la pale de rotor présente l'angle de pas optimisé pour la marche en charge partielle, et **en ce que** l'angle α1 s'inscrit dans la plage de 30° à 90°.

6. Pale de rotor d'éolienne selon une des revendications 3 à 5, **caractérisée en ce que** la pale de rotor d'éolienne présente une vitesse spécifique de calcul et fonctionne dans une marche en charge partielle de préférence avec un angle de pas optimal prédéfini qui, à la vitesse spécifique de calcul, conduit à une puissance absorbée optimale à partir du vent, et **en ce qu'**un angle α2 est défini dans le plan de rotor entre l'axe longitudinal (60) de la pale de rotor et la projection sur le plan de rotor d'une tangente (58) au bord arrière (18) de la pale de rotor sur la troisième section transversale (24) quand la pale de rotor présente l'angle de pas optimisé pour la marche en charge partielle, et **en ce que** l'angle α2 s'inscrit dans la plage de 25° à 90°.

7. Pale de rotor d'éolienne selon une des revendications 3 à 6, **caractérisée en ce qu'**il est formé un angle aigu entre un plan tangentiel au côté pression (32) sur le bord arrière (18) sur la troisième section transversale (24) et un plan tangentiel au côté aspiration (30) sur le bord arrière (18) sur la troisième section transversale (24).

8. Pale de rotor d'éolienne selon une des revendications 1 à 7, **caractérisée en ce qu'**un tronçon arrière du côté aspiration (30) dans le deuxième tronçon longitudinal, qui est en face du tronçon courbé de façon doublement concave du côté pression (32), est approximativement rectiligne dans la direction de section transversale de la pale de rotor.
